# EUROPÄISCHE PATENTSCHRIFT

(11) **EP 3 858 675 B1**
(45) Veröffentlichungstag und Bekanntmachung des Hinweises auf die Patenterteilung: **02.08.2023**
(21) Anmeldenummer: 20192587.2
(22) Anmeldetag: 25.08.2020
(51) Int. Cl.: B60Q 7/00

(54) **WARNDREIECK MIT EINER FOLIE, HALTEVORRICHTUNG FÜR DAS WARNDREIECK, HERSTELLUNGSVERFAHREN FÜR DIE FOLIE**
WARNING TRIANGLE WITH A FILM, HOLDING DEVICE FOR THE WARNING TRIANGLE, MANUFACTURING METHOD FOR THE FILM
TRIANGLE DE SIGNALISATION COMPRENANT UN FILM, DISPOSITIF DE MAINTIEN POUR LE TRIANGLE DE SIGNALISATION, PROCÉDÉ DE FABRICATION DU FILM

(30) Priorität: 28.01.2020 DE 102020102025
(43) Veröffentlichungstag der Anmeldung: 04.08.2021
(73) Patentinhaber: CT-Coating AG, 53639 Königswinter (DE)
(72) Erfinder:
(74) Vertreter: Bernsmann, Falk

(56) Entgegenhaltungen:
- EP-A1- 2 854 486
- EP-A2- 0 688 696
- DE-A1- 10 308 508
- DE-U1-202007 002 063
- DE-U1-202012 006 496
- US-B1- 10 252 778

## Beschreibung

### Technisches Gebiet

Die Erfindung betrifft ein Warndreieck mit einer Folie, wobei die Folie in einer Einsatzkonfiguration des Warndreiecks entlang einer Dreiecksebene des Warndreiecks aufgespannt ist.

Die Erfindung betrifft ferner eine Haltevorrichtung für das Warndreieck und ein Herstellungsverfahren für die Folie.

### Stand der Technik

Aus dem Stand der Technik sind Warndreiecke zur Absicherung von Gefahrenstellen im Straßenverkehr bekannt. Diese Warndreiecke bestehen in der Regel aus drei Seitenteilen aus roten Reflektoren, einer dazwischen aufgespannten Folie und einem Fuß. Um in einer Transportkonfiguration platzsparend in einem Fahrzeug verstaut werden zu können, sind die Warndreiecke meist faltbar ausgestaltet, sodass sie durch Entfalten der Schenkel, des Fußes und der Folie aus der Transportkonfiguration in eine Einsatzkonfiguration überführt werden können.

Nachteilig an üblichen Warndreiecken ist, dass sie bei schlechten Sichtverhältnissen, beispielsweise bei Nebel, Niederschlag oder Blendung durch Gegenverkehr oder Sonnenlicht, leicht übersehen werden können.

Die Patentanmeldung DE10010172A1 beschreibt ein Warndreieck mit reflektierenden Seitenteilen und einer selbstleuchtenden Schicht daran, die aus drei streifenförmigen Komponenten besteht, damit das Warndreieck faltbar ist. Nachteilig an dieser Ausgestaltung ist, dass nur eine kleine Teilfläche des Warndreiecks selbstleuchtend ist, sodass seine Sichtbarkeit nur geringfügig verbessert werden kann. Weiterhin ist ein photosensitives Element vorgesehen, durch welches das Leuchtmittel bei guten Umgebungslichtverhältnissen (wie Sonnenschein) automatisch außer Betrieb gesetzt wird.

Die Patentanmeldung US20130222147A1 beschreibt ein Warndreieck aus einer aufrollbaren, selbstleuchtenden Folie und einem Fuß. Da das Warndreieck nicht die reflektierenden Seitenteile üblicher Warndreiecke aufweist, ist seine Verwendung im Straßenverkehr wahrscheinlich nicht zulässig.

Das Gebrauchsmuster DE202007002063U1 beschreibt ein zusammenlegbares, selbstleuchtendes Warndreieck, dessen Warnfläche eine Elektrolumineszenz-Folie umfassen kann. Der Aufbau der Elektrolumineszenz-Folie wird nicht offenbart. Weiterhin umfasst das Warndreieck eine autonome Stromversorgungseinrichtung, welche durch einen Eisenkern, welcher sich lose in einer länglichen Spule befindet und bei jeder Kurve, die das Fahrzeug fährt, von einer zur anderen Seite rutscht, elektrische Energie gewinnt und in Akkus speichert. DE10308508 A1 beschreibt eine Haltevorrichtung zur Halterung eines Warndreieck gemäß dem Oberbegriff von Anspruch 8.

### Technische Aufgabe

Die Aufgabe der Erfindung ist es, ein kostengünstiges, einfach zu verwendendes und zuverlässiges Warndreieck für den Straßenverkehr bereitzustellen, das gegenüber üblichen Warndreiecken eine erhöhte Sicherheit bietet.

### Technische Lösung

Der Gegenstand der vorliegenden Erfindung stellt ein Warndreieck gemäß Anspruch 1 bereit, das die technische Aufgabe löst. Ebenso wird die Aufgabe durch eine Haltevorrichtung gemäß Anspruch 9 und ein Herstellungsverfahren gemäß Anspruch 10 gelöst. Vorteilhafte Ausgestaltungen ergeben sich aus den abhängigen Ansprüchen.

### Beschreibung der Ausführungsarten

Die Erfindung betrifft ein Warndreieck mit einer Folie, wobei die Folie in einer Einsatzkonfiguration des Warndreiecks entlang einer Dreiecksebene des Warndreiecks aufgespannt und vorzugsweise in einer Transportkonfiguration des Warndreiecks zusammengefaltet und/oder zusammengerollt ist.

Das Warndreieck ist dazu ausgelegt, in der Einsatzkonfiguration zur Warnung von Verkehrsteilnehmern aufgestellt zu werden, wobei eine Normale der Dreiecksebene den Verkehrsteilnehmern zugewandt ist, und vorzugsweise in der Transportkonfiguration mit einem gegenüber der Einsatzkonfiguration reduzierten Packmaß transportiert zu werden.

Das Warndreieck ist vorzugsweise faltbar ausgestaltet, um es durch ein Auseinanderfalten von der Transportkonfiguration in die Einsatzkonfiguration und durch ein Zusammenfalten aus der Einsatzkonfiguration in die Transportkonfiguration überführen zu können.

Das Warndreieck umfasst vorzugsweise drei gelenkig miteinander verbundene Seitenteile mit Reflektoren, die in der Einsatzkonfiguration ein Dreieck entlang der Dreiecksebene bilden, und vorzugsweise zumindest einen faltbaren Fuß zur Aufstellung des Warndreiecks in der Einsatzkonfiguration. Die Seitenteile und/oder der zumindest eine Fuß können wie bei üblichen Warndreiecken ausgestaltet und miteinander verbunden sein.

Die Folie ist vorzugsweise an den Seitenteilen befestigt, beispielsweise daran angeklebt, angeschweißt und/oder angeklemmt. In der Einsatzkonfiguration ist die Folie vorzugsweise zwischen den Seitenteilen aufgespannt und kann einen Zwischenraum zwischen den Seitenteilen insbesondere vollständig ausfüllen, sodass die Folie eine möglichst großflächige Leuchtschicht enthalten kann.

Eine Folie im Sinne der Erfindung ist ein vorzugsweise biegsamer Gegenstand, der eine Länge und eine zu der Länge orthogonale Breite entlang einer Folienebene aufweist, die jeweils wesentlich größer als eine Dicke der Folie senkrecht zu der Folienebene sind. Beispielsweise können die Länge und die breite jeweils 10 cm bis 100 cm, insbesondere jeweils 20 cm bis 50 cm, und die Dicke 0,01 mm bis 10 mm, insbesondere 0,1 mm bis 1 mm betragen.

Die Folie umfasst zumindest eine flächig entlang der Folienebene angeordnete elektrische Leuchtschicht zur Abgabe von sichtbarem Licht. Die Leuchtschicht verbessert die Sichtbarkeit des Warndreiecks erheblich.

Die Folie umfasst vorzugsweise zumindest eine entlang der Folienebene angeordnete Reflektionsschicht zur Reflektion von sichtbarem Licht. Die zumindest eine Reflektionsschicht kann von der zumindest einen Leuchtschicht umfasst, insbesondere mit ihr identisch, sein. Die zumindest eine Reflektionsschicht und die zumindest eine Leuchtschicht können entlang der Folienebene nebeneinander oder ineinander angeordnet sein, damit sie sich nicht gegenseitig bei einer Lichtabgabe senkrecht zur Folienebene behindern. Vorteilhaft an einer Reflektionsschicht ist, dass sie die Sichtbarkeit des Warndreiecks besonders zuverlässig, beispielsweise auch bei einem Ausfall der Leuchtschicht, verbessert.

Der Ausdruck "flächig entlang der Folienebene angeordnet" bedeutet im Sinne der Erfindung, dass die jeweilige Schicht entlang der Folienebene eine Länge und eine zu der Länge orthogonale Breite aufweist, die jeweils wesentlich größer sind als eine Dicke der Schicht senkrecht zu der Folienebene.

Eine Gesamtdicke der Leuchtschicht senkrecht zur Folienebene beträgt vorzugsweise von 1 µm und 1 mm, insbesondere von 2 µm bis 100 µm, beispielsweise von 5 µm bis 30 µm.

Die elektrische Leuchtschicht kann beispielsweise eine Elektrolumineszenz-Schicht und/oder eine OLED-Schicht umfassen.

Die Elektrolumineszenz-Schicht umfasst zwei elektrisch leitende Materiallagen als Elektroden, zwischen denen ein elektrolumineszentes Material elektrisch isoliert angeordnet ist. Zumindest eine Elektrode ist lichtdurchlässig und besteht beispielsweise aus Indium-Zinnoxid.

Bei dem elektrolumineszenten Material handelt es sich beispielsweise um Zinksulfid, einen II-VI-Verbindungshalbleiter, der mit verschiedenen Metallen wie Mangan, Gold, Silber, Kupfer oder Gallium dotiert sein kann, um unterschiedliche Lichtfarben zu erzeugen. Weißes Licht kann beispielsweise durch eine Überlagerung unterschiedlich dotierter Materialien erzeugt werden.

Die OLED-Schicht umfasst eine Anodenlage, bestehend beispielsweise aus Indium-Zinnoxid, und eine sich daran anschließenden Lochleitungslage. Zwischen Anodenlage und Lochleitungslage kann eine Lage aus PEDOT/PSS angeordnet sein, die zur Absenkung der Injektionsbarriere für Löcher dient und die Eindiffusion von Indium in den Übergang verhindert. An die Lochleitungslage schließt sich eine Farbstofflage an, die entweder einen organischen Farbstoff enthält (beispielsweise zu 5 bis 10 Prozent) oder aus dem Farbstoff besteht, z. B. aus Aluminium-tris(8-hydroxychinolin). Daran schließt sich optional noch eine Elektronenleitungslage an. Den Abschluss der OLED-Schicht bildet eine Kathodenlage, bestehend aus einem Metall oder einer Legierung mit geringer Elektronenaustrittsarbeit, wie zum Beispiel Calcium, Aluminium, Barium, Ruthenium und/oder eine Magnesium-Silber-Legierung. Der Farbstoff kann beispielsweise ein Derivat von Poly(p-phenylen-vinyl) umfassen.

Besonders vorteilhaft ist es, wenn die Leuchtschicht senkrecht zur Folienebene in der Einsatzkonfiguration zwischen 8,05 µm und 120 µm dick ist, wobei vorzugsweise die Anodenlage zwischen 0,05 µm und 5 µm, die Kathodenlage zwischen 4 µm und 45 µm, die Farbstofflage zwischen 2 µm und 30 µm und die Lochleitungslage zwischen 4 µm und 45 µm dick ist.

Die Folie umfasst zumindest eine flächig entlang der Folienebene angeordnete Photovoltaikschicht zur Versorgung der Leuchtschicht mit elektrischer Energie.

Die Photovoltaikschicht ist vorzugsweise als low-light-condition-Solarmodul und/oder als Dünnschichtsolarmodul ausgestaltet, umfassend beispielsweise amorphes Silicium (a-Si:H), mikrokristallines Silicium (pc-Si:H), Gallium-Arsenid (GaAs), Cadmiumtellurid (CdTe) oder Kupfer-Indium-(Gallium)-Schwefel-Selen-Verbindungen als photoaktives Material.

In einer weiteren vorteilhaften Ausführungsform umfasst die Photovoltaikschicht senkrecht zur Folienebene hintereinander wenigstens eine transluzente Frontelektrodenlage und/oder danach mittelbar oder unmittelbar wenigstens eine Trägerstrukturlage zur mechanischen Stabilisierung und/oder danach mittelbar oder unmittelbar wenigstens eine Photoaktivlage mit einem photoaktiven Material und/oder danach mittelbar oder unmittelbar wenigstens eine Transportlage und/oder danach mittelbar oder unmittelbar wenigstens eine Backelektrodenlage und/oder danach mittelbar oder unmittelbar wenigstens eine Verkapselungslage, wobei zwischen transparenter Frontelektrodenlage und Backelektrodenlage vorteilhaft eine Spannung anlegbar ist.

Denkbar ist, dass dabei auf die Transportlage und die Trägerstrukturlage verzichtet wird. Dies ist vorteilhaft, da auf diese Weise eine besonders dünne Ausführungsform möglich ist. Nachteilig ist die jedoch, da die Transportlage zur Aufrechterhaltung der Ladungstrennung besonders gute Eigenschaften aufweist. Zudem ist es denkbar, dass das photoaktive Material ohne eine stabilisierende Trägerstrukturlage seine Wirkung einbüßt. Für die Trägerstrukturlage sind beispielsweise Gläser, PMMA, Metallfolien, Plastikfolien denkbar. Für die Transportlage sind negative und positive Ausbildungen aus organischen und/oder anorganischen Stoffen denkbar. Sie haben die Aufgabe, die Elektronen besser zu transportieren.

Vorteilhaft ist die Verkapselungslage als elektrische Isolationslage, beispielsweise aus einem Kunststoff, ausgebildet. Wenn die Photovoltaikschicht an eine weitere Schicht angrenzt, die an einer der Photovoltaikschicht zugewandten Seite eine Verkapselungslage aufweist, kann die Photovoltaikschicht vorteilhafterweise an der der weiteren Schicht zugewandten Seite ohne Verkapselungslage ausgestaltet sein. Dadurch ist eine besonders materialsparende und schnelle Herstellung möglich.

Die zur Backelektrode angrenzende Verkapselungslage weist vorteilhaft eine Dicke zwischen 500 nm und 250 µm auf. Die Backelektrodenlage weist vorteilhaft eine Dicke zwischen 100 nm und 15 µm auf. Die Transportlage weist vorteilhaft eine Dicke zwischen 50 nm und 5 µm auf. Die Photoaktivlage weist vorteilhaft eine Dicke zwischen 50 nm und 5 µm auf. Die Trägerstrukturlage weist vorteilhaft eine Dicke zwischen 100 nm und 5 µm auf. Die Frontelektrodenlage weist vorteilhaft eine Dicke zwischen 100 nm und 5 µn auf. Die zur Frontelektrode angrenzende Verkapselungslage weist vorteilhaft eine Dicke zwischen 20 µm und 250 µm auf.

Die Kombination der Photovoltaikschicht mit der Leuchtschicht hat den Vorteil, dass zumindest ein Teil des Energiebedarfs der Leuchtschicht aus einem Umgebungslicht des Warndreiecks gedeckt werden kann. Insbesondere kann die Photovoltaikschicht die Leuchtschicht bei einer hohen Umgebungshelligkeit, wenn ein nichtselbstleuchtendes Warndreieck sich visuell nur unzureichend von seiner Umgebung abheben würde, mit zusätzlicher Energie versorgt und dadurch mit einer besonders hohen Leuchtdichte zum Leuchten gebracht werden, um eine hohe Sichtbarkeit des Warndreiecks zu bewirken.

Die zumindest eine Leuchtschicht, die zumindest eine Photovoltaikschicht und vorzugsweise die Reflektionsschicht umfassen jeweils eine Mehrzahl von entlang der Folienebene ausgerichteten Materiallagen mit voneinander unterschiedlichen Materialzusammensetzungen. Durch den Aufbau der Schichten aus entlang der Folienebene ausgerichteten Materiallagen können die Schichten besonders einfach, schnell und kostengünstig hergestellt werden, beispielsweise mit einem Druckverfahren, insbesondere mit einem Siebdruckverfahren.

Vorzugsweise erstrecken sich die Materiallagen jeweils über eine gesamte Fläche der Folie entlang der Folienebene. Dadurch können die Materiallagen auf besonders einfache Weise hergestellt werden.

Die zumindest eine Leuchtschicht ist vorzugsweise zur Erzeugung einer an eine Umgebungshelligkeit angepassten Leuchtdichte mit der Photovoltaikschicht elektrisch verbunden. Das heißt, bei einer hohen Umgebungshelligkeit, wenn die Photovoltaikschicht eine hohe elektrische Leistung bereitstellt, ist die Leuchtdichte höher als bei einer niedrigen Umgebungshelligkeit. Durch die angepasste Leuchtdichte wird bei jeder Umgebungshelligkeit eine optimale Sichtbarkeit des Warndreiecks sichergestellt.

Insbesondere kann die Leuchtdichte allein durch die bereitgestellte Leistung der Photovoltaikschicht ohne zusätzliche Sensoren oder Steuerelemente angepasst werden. Dadurch kann das Warndreieck besonders einfach hergestellt werden.

Im einfachsten Fall wird die Leuchtschicht ausschließlich durch die Photovoltaikschicht mit Energie versorgt, sodass die Leuchtschicht bei einer so geringen Umgebungshelligkeit, dass die Photovoltaikschicht keine elektrische Leistung bereitstellt, nicht leuchtet. Alternativ kann die Leuchtschicht zusätzlich zu der Photovoltaikschicht durch einen, beispielsweise parallel zu der Photovoltaikschicht mit der Leuchtschicht elektrisch verbundenen, Energiespeicher mit Energie versorgt werden, beispielsweise um eine Minimalleuchtdichte zur Verbesserung der Sichtbarkeit des Warndreiecks bei Dunkelheit sicherzustellen.

Der, insbesondere durch die Photovoltaikschicht aufladbare, Energiespeicher kann beispielsweise eine Batterie und/oder einen Akkumulator umfassen. Der Energiespeicher kann zum Beispiel an und/oder in einem Seitenteil und/oder einem Fuß des Warndreiecks angeordnet sein.

Das Warndreieck kann eine Ladevorrichtung zur Aufladung des Energiespeichers aus einer externen Energiequelle, beispielsweise aus dem Bordnetz eines Fahrzeugs, umfassen. Die Ladevorrichtung zur kabelgebundenen und/oder kabellosen Energieübertragung, beispielsweise zur induktiven Energieübertragung mit der externen Energiequelle verbindbar sein. Die Ladevorrichtung kann beispielsweise an und/oder in einem Seitenteil und/oder einem Fuß des Warndreiecks angeordnet sein.

Durch eine induktive Energieübertragung, beispielsweise gemäß dem Qi-Standard, kann der Energiespeicher, beispielsweise über eine in eine Haltevorrichtung für das Warndreieck integrierte induktive Übertragungsvorrichtung, ohne Kabel, beispielsweise über Steckverbindungen, verbinden zu müssen mit der externen Energiequelle verbunden werden. Dadurch kann das Warndreieck einfach, schnell und zuverlässig mit der externen Energiequelle verbunden und davon getrennt werden, ohne die Gefahr von Fehlkontakten oder Beschädigungen an Steckverbindern.

Die Folie umfasst zumindest eine flächig entlang der Folienebene angeordnete Energiespeicherschicht zur Speicherung elektrischer Energie zur Versorgung der Leuchtschicht, wobei die Energiespeicherschicht eine Mehrzahl von entlang der Folienebene ausgerichteten Materiallagen mit voneinander unterschiedlichen Materialzusammensetzungen umfasst.

Durch die Integration der Energiespeicherschicht in die Folie können vorteilhafterweise für die übrigen Komponenten des Warndreiecks, insbesondere die Seitenteile und den zumindest einen Fuß, Standard-Bauteile verwendet werden.

Die Energiespeicherschicht umfasst vorzugsweise wenigstens zwei Elektrodenlagen, dazwischen wenigstens eine Separatorlage mit einem Elektrolyten und an den Außenseiten je wenigstens eine Verkapselungslage. Vorteilhaft ist die Verkapselungslage jeweils als elektrische Isolationslage, beispielsweise aus einem Kunststoff, ausgebildet.

Wenn die Energiespeicherschicht an eine weitere Schicht angrenzt, die an einer der Energiespeicherschicht zugewandten Seite eine Verkapselungslage aufweist, kann die Energiespeicherschicht vorteilhafterweise an der der weiteren Schicht zugewandten Seite ohne Verkapselungslage ausgestaltet sein. Dadurch ist eine besonders materialsparende und schnelle Herstellung möglich.

Zumindest eine Elektrodenlage umfassen vorzugsweise Kohlenstoff, insbesondere in Form von Aktivkohle, Aktivkohlefaser, Carbid-abgeleitetem Kohlenstoff, Kohlenstoff-Aerogel, Graphit, Graphen und/oder Kohlenstoffnanoröhren, ein Übergangsmetalloxid, beispielsweise ein Oxid von Ruthenium, Iridium, Eisen und/oder Mangan, und/oder ein elektrisch leitfähiges Polymer, beispielsweise Polypyrrol, Polyanilin, Pentacen oder Polythiophen.

Die Separatorlage umfasst beispielsweise einen porösen Kunststoff. Der Elektrolyt umfasst beispielsweise eine wässrige Elektrolytlösung, eine organische Elektrolytlösung, eine ionische Flüssigkeit, einen superkonzentrierten Elektrolyten und/oder ein elektrisch leitfähiges Polymer.

Die Energiespeicherschicht ist vorzugsweise als Superkondensator ausgebildet.

Eine Dicke senkrecht zur Folienebene beträgt für die Verkapselungslagen vorteilhaft 20 µm bis 250 µm, für die Elektrodenlagen vorteilhaft 3 µm bis 250 µm und/oder für die Separatorlage vorteilhaft 0,5 µm bis 250 µm.

Die zumindest eine Energiespeicherschicht ist vorzugsweise senkrecht zu der Folienebene vor und/oder hinter der zumindest einen Photovoltaikschicht und der zumindest einen Leuchtschicht angeordnet. Dadurch, dass die Energiespeicherschicht nicht entlang der Folienebene neben der Leuchtschicht und/oder der Photovoltaikschicht angeordnet ist, können die Schichten besonders einfach mit einem additiven Verfahren, beispielsweise durch Siebdruck, nacheinander hergestellt werden.

Die Folie umfasst zumindest eine flächig entlang der Folienebene angeordnete Induktionsschicht zum induktiven Laden der Energiespeicherschicht, wobei die Induktionsschicht eine Mehrzahl von entlang der Folienebene ausgerichteten Materiallagen mit voneinander unterschiedlichen Materialzusammensetzungen umfasst.

Durch die Integration der Induktionsschicht in die Folie können vorteilhafterweise für die übrigen Komponenten des Warndreiecks, insbesondere die Seitenteile und den zumindest einen Fuß, Standard-Bauteile verwendet werden.

Die Induktionsschicht umfasst vorzugsweise zumindest eine Induktionsspule aus einem elektrisch leitfähigen Material, insbesondere einem Metall oder einer Metalllegierung, und eine elektrisch isolierende Ummantelung der Induktionsspule. Die Ummantelung umfasst beispielsweise einen Kunststoff. Die Induktionsschicht umfasst vorzugsweise eine Regelvorrichtung zur Regelung des induzierten Stroms und/oder der induzierten Spannung.

Die zumindest eine Induktionsschicht ist vorzugsweise senkrecht zu der Folienebene vor und/oder hinter der zumindest einen Photovoltaikschicht und der zumindest einen Leuchtschicht angeordnet. Dadurch, dass die Induktionsschicht nicht entlang der Folienebene neben der Leuchtschicht und/oder der Photovoltaikschicht angeordnet ist, können die Schichten besonders einfach mit einem additiven Verfahren, beispielsweise durch Siebdruck, nacheinander hergestellt werden.

Die zumindest eine Leuchtschicht vorzugsweise an einer zur Folienebene parallelen Vorderseite der Folie angeordnet, und die zumindest eine Photovoltaikschicht ist vorzugsweise an einer der Vorderseite gegenüberliegenden, zur Folienebene parallelen Rückseite der Folie angeordnet. Als Vorderseite wird im Sinne der Erfindung die Seite der Folie bezeichnet, die bei einer Verwendung des Warndreiecks in der Einsatzkonfiguration den zu warnenden Verkehrsteilnehmern zugewandt ist.

Durch die Anordnung der Leuchtschicht und Photovoltaikschicht an Vorderseite und Rückseite steht jeder der beiden Schichten eine möglichst große Fläche zur Abgabe oder Aufnahme von Licht zur Verfügung. Außerdem wird die Sichtbarkeit des Warndreiecks besonders stark beeinträchtigt, wenn Licht von der Rückseite auf das Warndreieck fällt, das die zu warnenden Verkehrsteilnehmer blenden könnte. Daher ist es vorteilhaft, dass bei einer Beleuchtung der Rückseite des Warndreiecks von der Photovoltaikschicht besonders viel Energie bereitgestellt wird, um eine besonders hohe Leuchtdichte der Leuchtschicht zu bewirken.

Bei einer weiteren vorteilhaften Ausführungsform ist die Photovoltaikschicht als zumindest bereichsweise transluzente, insbesondere transparente, Schicht ausgebildet, insbesondere derart, dass senkrecht zur Folienebene die wenigstens eine Leuchtschicht von der Vorderseite des Warndreiecks her unmittelbar auf die wenigstens Photovoltaikschicht folgt. Wenn die Photovoltaikschicht transluzent ausgebildet ist, kann sie bei Abnahme des einstrahlenden Lichtes, zum Beispiel in der Abenddämmerung, als durchlässige Schicht für das Licht der Leuchtschicht Verwendung finden.

Dabei ist denkbar, dass eine Durchkontaktierung zwischen der Photovoltaikschicht und einer Energiespeicherschicht durch die Beleuchtungsschicht hindurch das Übertragen der in der Photovoltaikschicht erzeugten elektrischen Energie in die Energiespeicherschicht ermöglicht. Eine weitere Kontaktierung ermöglicht vorteilhaft das Freisetzen der in der Energiespeicherschicht gespeicherten Energie für die Versorgung der Leuchtschicht.

In einer weiteren vorteilhaften Ausführungsform ist die wenigstens eine Photovoltaikschicht opak ausgebildet. Dies ist besonders vorteilhaft, da Photovoltaikschichten, die nicht transparent ausgebildet sind, einen größeren Wirkungsgrad gegenüber transparenten Photovoltaikschichten aufweisen.

Die Photovoltaikschicht und die Leuchtschicht können entlang der Folienebene nebeneinander oder ineinander angeordnet sein, damit sie sich nicht gegenseitig bei einer Lichtaufnahme, beziehungsweise Lichtabgabe senkrecht zur Folienebene behindern. Nachteilig dabei ist, dass nicht jeweils die ganze Fläche der Folie für die Photovoltaikschicht und die Leuchtschicht zur Verfügung steht. Vorteilhaft ist, dass eine Energiespeicherschicht sowohl angrenzend zu der Photovoltaikschicht als auch angrenzend zu der Leuchtschicht angeordnet werden kann, was einen besonders effizienten Energietransport ermöglicht.

Vorzugsweise ist oder sind zwischen der zumindest einen Leuchtschicht und der zumindest einen Photovoltaikschicht zumindest eine Energiespeicherschicht und/oder zumindest eine Induktionsschicht angeordnet. Durch eine solche Anordnung behindern die Energiespeicherschicht und die Induktionsschicht eine Lichtaufnahme oder Lichtabgabe der Leuchtschicht und der Photovoltaikschicht nicht.

Vorzugsweise ist die zumindest eine Induktionsschicht und/oder Energiespeicherschicht zumindest bereichsweise transluzent, insbesondere transparent. Durch diese Ausgestaltungen kann Licht von der Leuchtschicht oder Photovoltaikschicht durch die Energiespeicherschicht und/oder Induktionsschicht hindurch aufgenommen oder abgegeben werden, sodass die Schichtabfolge beispielsweise für eine möglichst einfache Herstellung oder eine effiziente Verbindung der einzelnen Schichten optimiert sein kann.

Wenn die Induktionsschicht und/oder Energiespeicherschicht bereichsweise transluzent ist, ist vorzugsweise zumindest ein entlang der Folienebene zentraler Bereich der jeweiligen Schicht transluzent. Nicht-transluzente Komponenten der Schicht, beispielsweise eine Induktionsspule und/oder eine Regelschaltung der Induktionsschicht und/oder Elektroden der Energiespeicherschicht, können beispielsweise außerhalb eines transluzenten Bereichs, vorzugsweise außerhalb des zentralen Bereichs der jeweiligen Schicht, angeordnet sein.

Im Sinne der Erfindung ist ein transluzenter Körper für sichtbares Licht zumindest partiell durchlässig, und ein transparenter Körper durchsichtig.

Die zumindest eine Energiespeicherschicht und die zumindest eine Induktionsschicht können entlang der Folienebene nebeneinander oder ineinander angeordnet sein, beispielsweise um eine besonders geringe Dicke der Folie senkrecht zur Folienebene zu erreichen.

Das Warndreieck umfasst vorzugsweise zumindest einen Sensor zur Detektion der Einsatzkonfiguration des Warndreiecks und/oder zur Messung einer Umgebungshelligkeit des Warndreiecks und zumindest eine mit dem zumindest einen Sensor und der zumindest einen Leuchtschicht kommunikativ verbundene Steuereinheit zur automatischen Aktivierung der zumindest einen Leuchtschicht bei einer Detektion der Einsatzkonfiguration und/oder automatischen Anpassung einer Leuchtdichte der Leuchtschicht an die Umgebungshelligkeit.

Durch die automatische Aktivierung wird sichergestellt, dass die Leuchtschicht bei einer Verwendung des Warndreiecks ohne Zutun eines Benutzers aktiviert wird, um eine optimale Sichtbarkeit sicherzustellen. Durch die automatische Anpassung wird ein besonders energieeffizienter Betrieb bei optimaler Sichtbarkeit des Warndreiecks erreicht.

Der Sensor und die Steuereinheit können beispielsweise von einem Schalter gebildet sein, der die Leuchtschicht bei einer Überführung des Warndreiecks von der Transportkonfiguration in die Einsatzkonfiguration, beispielsweise durch ein Entfalten des Warndreiecks, automatisch aktiviert. Dadurch wird eine automatische Aktivierung mit besonders einfachen Mitteln erreicht.

Der Sensor kann beispielsweise die zumindest eine Photovoltaikschicht umfassen, wobei die Umgebungshelligkeit von der Steuereinheit durch eine von der Photovoltaikschicht abgegebene Stromstärke und/oder elektrische Spannung detektiert werden kann. Der Sensor kann eine von der Photovoltaikschicht separate Photodiode zur Messung der Umgebungshelligkeit umfassen.

Die zumindest eine Steuereinheit kann beispielsweise ein eingebettetes Computersystem und/oder einen Einplatinen-Computer umfassen. Die kommunikative Verbindung kann kabelgebunden und/oder kabellos ausgestaltet sein.

Der zumindest eine Sensor und/oder die zumindest eine Steuereinheit können in und/oder an dem Warndreieck, beispielsweise in und/oder an einem Seitenteil des Warndreiecks, angeordnet sein. Die zumindest eine Steuereinheit kann von dem Warndreieck entfernt angeordnet und insbesondere in eine Haltevorrichtung zur Halterung des Warndreiecks, insbesondere in der Transportkonfiguration, integriert sein.

Die Folie umfasst vorzugsweise zumindest ein sich flächig entlang der Folienebene erstreckendes Trägerelement, auf das die zumindest eine Leuchtschicht, die zumindest eine Photovoltaikschicht, bevorzugt zumindest eine Reflektionsschicht bevorzugt zumindest eine Energiespeicherschicht und bevorzugt zumindest eine Induktionsschicht aufgebracht sind.

Die Schichten können einseitig oder beidseitig auf den Flächenseiten des Trägerelements aufgebracht sein. Eine einseitige Aufbringung erlaubt eine besonders schnelle Herstellung. Eine beidseitige Aufbringung sorgt durch die Anordnung des Trägerelements zwischen den Schichten für eine besonders hohe mechanische Stabilität. Beispielsweise können die Leuchtschicht auf einer Flächenseite und eine Energiespeicherschicht auf der gegenüberliegenden Flächenseite des Trägerelements aufgebracht sein.

Das Trägerelement umfasst beispielsweise eine Kunststofffolie, umfassend insbesondere PET, ein Polyimid, PMMA und/oder ein Polycarbonat, und/oder eine Metallfolie, vorzugsweise mit einer Dicke von 0,01 mm bis 10 mm, insbesondere von 0,1 mm bis 5 mm. Das Trägerelement umfasst insbesondere eine PMMA-Folie mit einer Dicke von 1 mm bis 5 mm, beispielsweise 3 mm. Vorteilhafterweise ist das Trägerelement dreieckig ausgebildet. Das Trägerelement verleiht der Folie vorteilhafterweise eine ausreichende mechanische Stabilität, damit die Folie bei einer Benutzung des Warndreiecks, insbesondere bei einer Überführung von der Transportkonfiguration in die Einsatzkonfiguration, nicht beschädigt wird.

Die Folie umfasst vorzugsweise zumindest eine Verkapselungsschicht zum Schutz der zumindest einen Leuchtschicht, der zumindest einen Photovoltaikschicht, bevorzugt zumindest einer Energiespeicherschicht und bevorzugt zumindest einer Induktionsschicht vor Umwelteinflüssen, insbesondere vor Feuchtigkeit und/oder mechanischen Belastungen.

Die Verkapselungsschicht umfasst beispielsweise einen Kunststoff, insbesondere PET, ein Polyimid, PMMA und/oder ein Polycarbonat.

Das Trägerelement und/oder die Verkapselungsschicht ist vorzugsweise zumindest bereichsweise transluzent, insbesondere transparent. Dies ist besonders vorteilhaft, um durchlässig für das von der Leuchtschicht abgegebene oder von der Photovoltaikschicht aufgenommene Licht zu sein.

Die Erfindung betrifft eine Haltevorrichtung zur Halterung eines erfindungsgemäßen Warndreiecks, insbesondere in der Transportkonfiguration. Die Haltevorrichtung kann beispielsweise eine Hülle oder Tasche zur Aufnahme des Warndreiecks umfassen.

Die Haltevorrichtung umfasst zumindest eine induktive Übertragungsvorrichtung zur induktiven Aufladung eines elektrischen Energiespeichers des Warndreiecks und zumindest einen Energiespeicher und/oder ein Anschlussmittel für eine externe Energiequelle zur Versorgung der Übertragungsvorrichtung mit elektrischer Energie.

Mit Hilfe der Übertragungsvorrichtung kann das Warndreieck an der Haltevorrichtung aufgeladen werden, ohne dafür Kabel oder Steckverbinder verbinden zu müssen. Das Warndreieck kann daher besonders einfach und schnell und ohne die Gefahr von Fehlkontakten oder Beschädigungen an Kabeln oder Steckverbindern an der Haltevorrichtung angebracht und davon getrennt werden.

Die Übertragungsvorrichtung umfasst vorzugsweise zumindest eine Induktionsspule aus einem elektrisch leitfähigen Material, insbesondere einem Metall oder einer Metalllegierung, und eine elektrisch isolierende Ummantelung der Induktionsspule. Die Ummantelung umfasst beispielsweise einen Kunststoff. Die Übertragungsvorrichtung umfasst vorzugsweise eine Regelvorrichtung zur Regelung des induzierten Stroms und/oder der induzierten Spannung.

Die zumindest eine Übertragungsvorrichtung umfasst vorzugsweise zumindest eine eine Mehrzahl von zueinander parallelen Materiallagen mit voneinander unterschiedlichen Materialzusammensetzungen umfassende Induktionsschicht zur elektrischen Erzeugung eines Magnetfelds.

Vorzugsweise ist die zumindest eine Induktionsspule der zumindest einen Induktionsschicht der Folie des Warndreiecks für eine koaxiale Anordnung zu der zumindest einen Induktionsspule der Übertragungsvorrichtung angeordnet. Dadurch wird eine besonders effiziente Energieübertragung bewirkt.

Die Erfindung betrifft ein Verfahren zur Herstellung der Folie eines erfindungsgemäßen Warndreiecks. Das Verfahren umfasst ein Bereitstellen eines flächigen Trägerelements der Folie, wobei das Trägerelement insbesondere wie zum erfindungsgemäßen Warndreieck beschrieben ausgestaltet sein kann.

Das Verfahren umfasst ein Siebdrucken der zumindest einen Leuchtschicht, der zumindest einen Photovoltaikschicht, bevorzugt zumindest einer Energiespeicherschicht, bevorzugt zumindest einer Induktionsschicht und bevorzugt zumindest einer Verkapselungsschicht der Folie auf das Trägerelement, wobei die Schichten auf eine oder auf beide Flächenseiten des Trägerelements gedruckt werden können.

Die Schichten können insbesondere wie zum erfindungsgemäßen Warndreieck beschrieben ausgestaltet sein. Vorzugsweise werden alle Schichten der Folie durch Siebdrucken hergestellt. Insbesondere können auch zum Betrieb der Folie notwendige elektrische Verbindungen zwischen den Schichten und/oder innerhalb der Schichten der Folie durch Siebdrucken hergestellt werden. Besonders bevorzugt wird die gesamte Folie oder die gesamte Folie bis auf das Trägerelement durch Siebdrucken hergestellt.

Grundsätzlich können die Materialien zur Erzeugung der Schichten als Pasten bereitgestellt werden, welche mit einem Siebdruckverfahren aufgebracht werden. Der Vorteil des Siebdruckverfahrens ist, dass die Schichten sehr schnell und kostengünstig aufgetragen werden können. Geschwindigkeiten von bis zu 400 m² pro Stunde sind mit einer entsprechenden Druckmaschine möglich.

### Kurze Beschreibung der Zeichnungen

Weitere Vorteile, Ziele und Eigenschaften der Erfindung werden anhand nachfolgender Beschreibung und anliegender Zeichnungen erläutert, in welchen beispielhaft erfindungsgemäße Gegenstände dargestellt sind. Merkmale, welche in den Figuren wenigstens im Wesentlichen hinsichtlich ihrer Funktion übereinstimmen, können hierbei mit gleichen Bezugszeichen gekennzeichnet sein, wobei diese Merkmale nicht in allen Figuren beziffert und erläutert sein müssen.
Figur 1 zeigt eine schematische Ansicht eines erfindungsgemäßen Warndreiecks.
Figur 2 zeigt eine schematische Schnittdarstellung senkrecht zur Folienebene einer Folie.
Figur 3 zeigt eine schematische Schnittdarstellung senkrecht zur Folienebene einer weiteren Folie.
Figur 4 zeigt eine schematische Schnittdarstellung senkrecht zur Folienebene einer Leuchtschicht einer Folie.
Figur 5 zeigt eine schematische Schnittdarstellung senkrecht zur Folienebene einer Induktionsschicht einer Folie.
Figur 6 zeigt eine schematische Schnittdarstellung senkrecht zur Folienebene einer Energiespeicherschicht einer Folie.
Figur 7 zeigt eine schematische Schnittdarstellung senkrecht zur Folienebene einer Photovoltaikschicht einer Folie.

### Fig.1

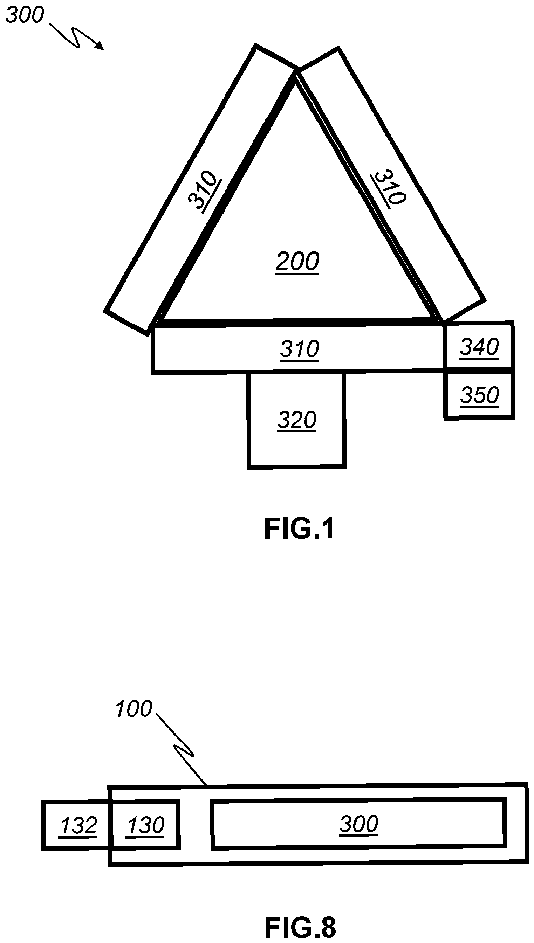

Figur 1 zeigt eine schematische Ansicht eines erfindungsgemäßen Warndreiecks 300. Das dargestellte Warndreieck 300 umfasst beispielsweise drei gelenkig miteinander verbundene Seitenteile 310, die mit Reflektoren versehen sein können. Das Warndreieck 300 umfasst ferner einen Fuß 320 zur Aufstellung des Warndreiecks 300. Die Seitenteile 310 und der Fuß 320 können insbesondere wie bei bekannten Warndreiecken ausgestaltet und miteinander verbunden sein.

Zwischen den in der gezeigten Einsatzkonfiguration des Warndreiecks 300 ein Dreieck bildenden Seitenteilen 310 ist eine Folie 200 entlang der Dreiecksebene (parallel zur Zeichenebene) des Warndreiecks 300 aufgespannt. Die Folie 200 füllt den Zwischenraum zwischen den Seitenteilen 310 vorzugsweise vollständig aus. Details der Folie 200 sind hier der Übersichtlichkeit halber nicht dargestellt.

Das dargestellte Warndreieck 300 umfasst beispielsweise einen Sensor 340 zur Detektion der Einsatzkonfiguration des Warndreiecks 300 und eine mit dem Sensor 340 und einer Leuchtschicht der Folie 200 kommunikativ verbundene Steuereinheit 350 zur automatischen Aktivierung der Leuchtschicht 210 bei einer Detektion der Einsatzkonfiguration.

Der Sensor 340 und die Steuereinheit 350 können beispielsweise von einem Schalter gebildet sein, der bei einem Auseinanderfalten des Warndreiecks 300 von seiner Transportkonfiguration in die Einsatzkonfiguration automatisch die Leuchtschicht aktiviert.

### Fig.2

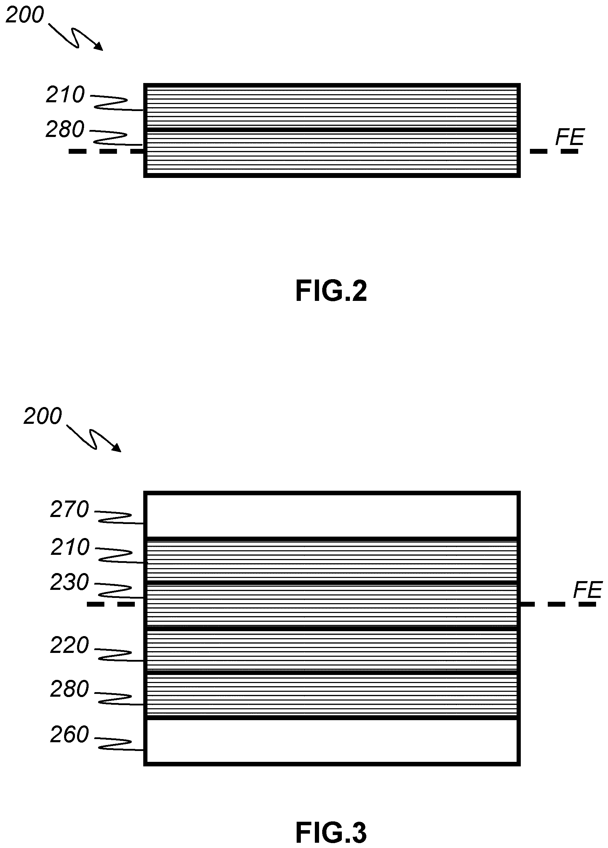

Figur 2 zeigt eine schematische Schnittdarstellung senkrecht zur Folienebene FE einer Folie 200 eines erfindungsgemäßen Warndreiecks 300. Die Folie 200 erstreckt sich flächig entlang einer Folienebene FE und umfasst zumindest eine elektrisch Leuchtschicht 210, beispielsweise eine Elektrolumineszenz-Schicht, und eine Photovoltaikschicht 280, beispielsweise ein Dünnschicht-Solarmodul, zur Gewinnung elektrischer Energie zur Versorgung der Leuchtschicht 210.

Die Leuchtschicht 210 und die Photovoltaikschicht 280 umfassen jeweils eine Mehrzahl von entlang der Folienebene FE ausgerichteten Materiallagen (durch Schraffur dargestellt) mit voneinander unterschiedlichen Materialzusammensetzungen.

Zum Betrieb der Leuchtschicht 210 notwendige elektrische Verbindungen zwischen den Schichten und/oder innerhalb der Schichten der Folie 200 sind hier und in den folgenden Figuren der Übersichtlichkeit halber nicht dargestellt.

Die Leuchtschicht 210 ist vorzugsweise zur Erzeugung einer an eine Umgebungshelligkeit angepassten Leuchtdichte mit der Photovoltaikschicht 280 elektrisch verbunden.

Die Photovoltaikschicht 280 ist beispielsweise senkrecht zu der Folienebene FE hinter der Leuchtschicht 210 angeordnet.

### Fig.3

Figur 3 zeigt eine schematische Schnittdarstellung senkrecht zur Folienebene FE einer weiteren Folie 200 eines erfindungsgemäßen Warndreiecks.

Zusätzlich zu den Schichten der Folie 200 aus Figur 2 kann die in Figur 3 dargestellte Folie 200 folgende Schichten umfassen:

Die dargestellte Folie 200 umfasst eine eine Mehrzahl von entlang der Folienebene FE ausgerichteten Materiallagen (durch Schraffur dargestellt) mit voneinander unterschiedlichen Materialzusammensetzungen umfassende und beispielsweise als Superkondensator ausgestaltete Energiespeicherschicht 220 zur Speicherung von durch die Photovoltaikschicht 280 oder eine Induktionsschicht 230 gewonnener elektrischer Energie zur Versorgung der Leuchtschichten 210.

Die Energiespeicherschicht 220 ist beispielsweise senkrecht zu der Folienebene FE zwischen der Leuchtschicht 210 und der Photovoltaikschicht 280 angeordnet.

Die dargestellte Folie 200 umfasst eine flächig entlang der Folienebene FE angeordnete Induktionsschicht 230 zum induktiven Laden der Energiespeicherschicht 220, wobei die Induktionsschicht 230 eine Mehrzahl von entlang der Folienebene FE ausgerichteten Materiallagen (durch Schraffur dargestellt) mit voneinander unterschiedlichen Materialzusammensetzungen umfasst.

Die Induktionsschicht 230 ist beispielsweise senkrecht zu der Folienebene FE zwischen der Leuchtschicht 210 und der Photovoltaikschicht 280 angeordnet.

Die dargestellte Folie 200 umfasst ein sich flächig entlang der Folienebene FE erstreckendes Trägerelement 260, auf das die Photovoltaikschicht 280, die Leuchtschicht 210, die Induktionsschicht 230 und die Energiespeicherschicht 220 aufgebracht sind. Die Schichten können wie in Figur 3 gezeigt einseitig oder beidseitig auf dem Trägerelement 260 aufgebracht sein. Das Trägerelement 260 umfasst beispielsweise eine zumindest transluzente Kunststofffolie. Das Trägerelement 260 umfasst insbesondere eine PMMA-Folie, beispielsweise mit einer Dicke von 3 mm.

Die dargestellte Folie 200 umfasst eine Verkapselungsschicht 270, beispielsweise aus einem zumindest transluzenten Kunststoff, zum Schutz der Photovoltaikschicht 280, der Leuchtschicht 210, der Induktionsschicht 230 und der Energiespeicherschicht 220 vor Umwelteinflüssen.

### Fig.4

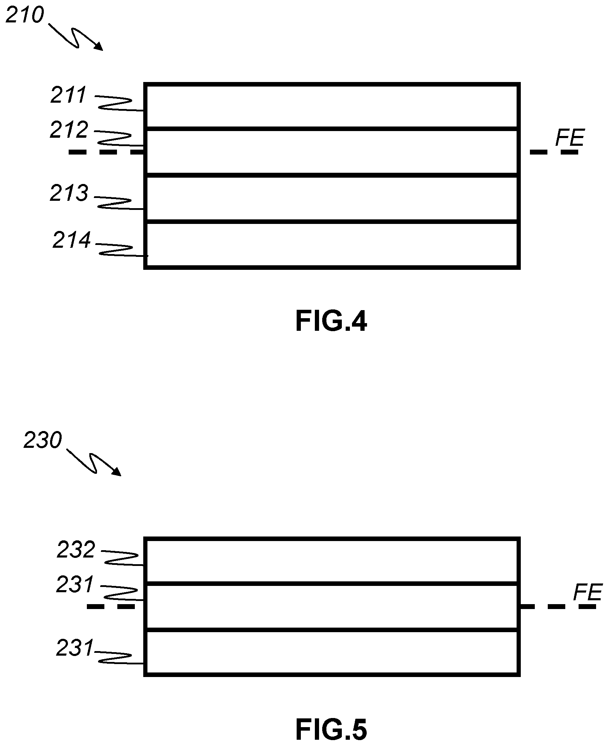

Figur 4 zeigt eine schematische Schnittdarstellung senkrecht zur Folienebene FE einer beispielsweise als OLED ausgestalteten Leuchtschicht 210 einer Folie 200 eines erfindungsgemäßen Warndreiecks, umfassend mehrere entlang der Folienebene FE ausgerichtete Materiallagen mit voneinander unterschiedlichen Materialzusammensetzungen.

Die dargestellte Leuchtschicht 210 umfasst beispielsweise eine Anodenlage 211, bestehend beispielsweise aus Indium-Zinnoxid, und eine sich daran anschließenden Lochleitungslage 212. An die Lochleitungslage 212 schließt sich eine Farbstofflage 213 an, die einen organischen Farbstoff enthält. Den Abschluss der dargestellten Leuchtschicht 210 bildet eine Kathodenlage 214, bestehend aus einem Metall, wie zum Beispiel Calcium oder Barium. Der Farbstoff kann beispielsweise ein Derivat von Poly(p-phenylen-vinyl) umfassen.

### Fig.5

Figur 5 zeigt eine schematische Schnittdarstellung senkrecht zur Folienebene FE einer Induktionsschicht 230 einer Folie 200 eines erfindungsgemäßen Warndreiecks, umfassend mehrere entlang der Folienebene FE ausgerichtete Materiallagen mit voneinander unterschiedlichen Materialzusammensetzungen.

Die dargestellte Induktionsschicht 230 umfasst eine beispielsweise Induktionsspule 231, beispielsweise aus einem Metall, und eine elektrisch isolierende Ummantelung 232, beispielsweise aus einem Kunststoff, zumindest senkrecht zur Folienebene FE über und unter der Induktionsspule 231.

### Fig.6

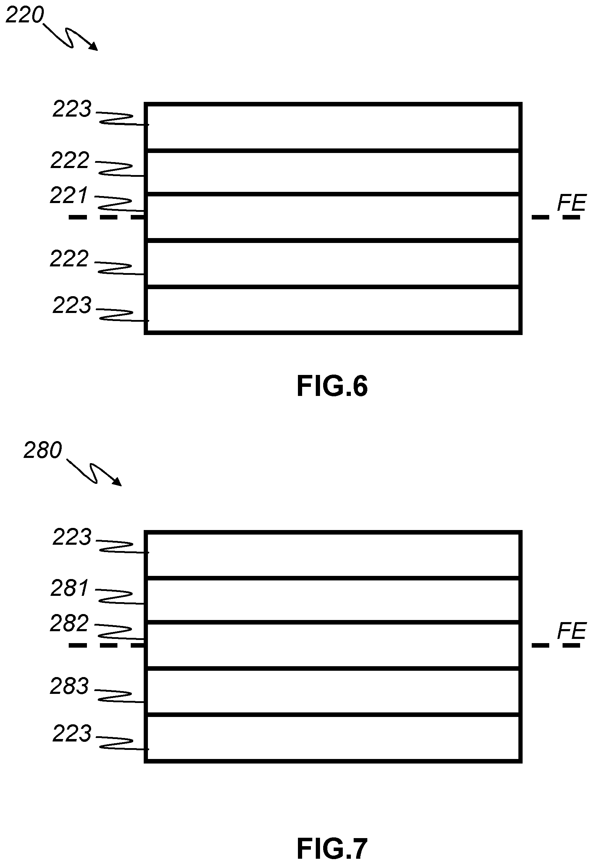

Figur 6 zeigt eine schematische Schnittdarstellung senkrecht zur Folienebene FE einer Energiespeicherschicht 220 einer Folie 200 eines erfindungsgemäßen Warndreiecks, umfassend mehrere entlang der Folienebene FE ausgerichtete Materiallagen mit voneinander unterschiedlichen Materialzusammensetzungen.

Die beispielsweise als Superkondensator ausgebildete Energiespeicherschicht 220 umfasst zum Beispiel zwei Elektrodenlagen 222, dazwischen eine Separatorlage 221 mit einem Elektrolyten und an den Außenseiten je eine als elektrischer Isolator ausgebildete Verkapselungslage 223, beispielsweise aus einem Kunststoff.

Die Elektrodenlage 222 umfassen beispielsweise Kohlenstoff und/oder ein elektrisch leitfähiges Polymer. Die Verkapselungslagen 223 umfassen beispielsweise einen elektrisch isolierenden Kunststoff. Die Separatorlage 221 umfasst beispielsweise einen porösen Kunststoff. Der Elektrolyt umfasst beispielsweise eine organische Elektrolytlösung.

### Fig.7

Figur 7 zeigt eine schematische Schnittdarstellung senkrecht zur Folienebene FE einer Photovoltaikschicht 280 einer Folie 200 eines erfindungsgemäßen Warndreiecks, umfassend mehrere entlang der Folienebene FE ausgerichtete Materiallagen mit voneinander unterschiedlichen Materialzusammensetzungen.

Die Photovoltaikschicht 280 ist beispielsweise als Dünnschichtsolarzelle ausgestaltet, umfassend beispielsweise mikrokristallines Silicium (µc-Si:H) als photoaktives Material.

Die Photovoltaikschicht 280 umfasst beispielsweise senkrecht zur Folienebene FE übereinander eine transluzente Frontelektrodenlage 281 und danach eine Photoaktivlage 282 mit dem photoaktiven Material und danach eine Backelektrodenlage 283.

Den Abschluss der Photovoltaikschicht 280 senkrecht zur Folienebene FE bildet beispielsweise jeweils eine elektrisch isolierende Verkapselungslage 223, beispielsweise aus einem Kunststoff.

### Fig.8

Figur 8 zeigt eine erfindungsgemäße Haltevorrichtung zur Halterung eines erfindungsgemäßen Warndreiecks (300) in der Transportkonfiguration.

Die Haltevorrichtung 100 ist beispielsweise als Hülle zur Aufnahme des Warndreiecks 300 in seiner Transportkonfiguration ausgestaltet.

Die dargestellte Haltevorrichtung 100 umfasst eine induktive Übertragungsvorrichtung 130 zur induktiven Aufladung eines elektrischen Energiespeichers des Warndreiecks 300 und ein Anschlussmittel 132 für eine externen Energiequelle zur Versorgung der Übertragungsvorrichtung 130 mit elektrischer Energie.

Das Anschlussmittel 132 umfasst beispielsweise ein Kabel mit einem Stecker zum Anschluss an eine Bordnetz-Steckdose eines Fahrzeugs.

**Liste der Bezugszeichen**

| | | | |
|---|---|---|---|
| 100 | Haltevorrichtung | 230 | Induktionsschicht |
| 130 | Übertragungsvorrichtung | 231 | Induktionsspule |
| 132 | Anschlussmittel | 232 | Ummantelung |
| 200 | Folie | 260 | Trägerelement |
| 210 | Leuchtschicht | 270 | Verkapselungsschicht |
| 211 | Anodenlage | 280 | Photovoltaikschicht |
| 212 | Lochleitungslage | 281 | Frontelektrodenlage |
| 213 | Farbstofflage | 282 | Photoaktivlage |
| 214 | Kathodenlage | 283 | Backelektrodenlage |
| 220 | Energiespeicherschicht | 300 | Warndreieck |
| 221 | Separatorlage | 340 | Sensor |
| 222 | Elektrodenlage | 350 | Steuereinheit |
| 223 | Verkapselungslage | FE | Folienebene |

## Patentansprüche

1. Warndreieck (300) mit einer Folie (200), wobei die Folie in einer Einsatzkonfiguration des Warndreiecks (300) entlang einer Dreiecksebene des Warndreiecks (300) aufgespannt ist,
a) wobei die Folie (200) zumindest eine flächig entlang einer Folienebene (FE) der Folie angeordnete elektrische Leuchtschicht (210) zur Abgabe von sichtbarem Licht umfasst,
**dadurch gekennzeichnet, dass**
b) die Folie (200) zumindest eine flächig entlang der Folienebene (FE) angeordnete Photovoltaikschicht (280) zur Versorgung der Leuchtschicht (210) mit elektrischer Energie umfasst,
c) wobei die Folie (200) zumindest eine entlang der Folienebene (FE) angeordnete Energiespeicherschicht (220) zur Speicherung elektrischer Energie zur Versorgung der Leuchtschicht (210) umfasst,
d) wobei die Folie (200) zumindest eine flächig entlang der Folienebene (FE) angeordnete Induktionsschicht (230) zum induktiven Laden der Energiespeicherschicht (220) umfasst,
e) wobei die zumindest eine Leuchtschicht (210), die zumindest eine Photovoltaikschicht (280), die zumindest eine Energiespeicherschicht (220) und die zumindest eine Induktionsschicht (230) jeweils eine Mehrzahl von entlang der Folienebene (FE) ausgerichteten Materiallagen mit voneinander unterschiedlichen Materialzusammensetzungen umfassen.

2. Warndreieck (300) nach Anspruch 1,
**dadurch gekennzeichnet, dass**
die Folie in einer Transportkonfiguration des Warndreiecks (300) zusammengefaltet und/oder zusammengerollt ist.

3. Warndreieck (300) nach einem der Ansprüche 1 bis 2,
**dadurch gekennzeichnet, dass**
die zumindest eine Leuchtschicht (280) zur Erzeugung einer an eine Umgebungshelligkeit angepassten Leuchtdichte mit der Photovoltaikschicht (280) elektrisch verbunden ist.

4. Warndreieck (300) nach einem der Ansprüche 1 bis 3,
**dadurch gekennzeichnet, dass**
a) die zumindest eine Leuchtschicht (210) an einer zur Folienebene (FE) parallelen Vorderseite der Folie (200) angeordnet ist und
b) die zumindest eine Photovoltaikschicht (280) an einer der Vorderseite gegenüberliegenden, zur Folienebene (FE) parallelen Rückseite der Folie (200) angeordnet ist.

5. Warndreieck (300) nach Anspruch 4,
**dadurch gekennzeichnet, dass**
zwischen der zumindest einen Leuchtschicht (210) und der zumindest einen Photovoltaikschicht (280) zumindest eine Energiespeicherschicht (220) und/oder zumindest eine Induktionsschicht (230) angeordnet ist oder sind.

6. Warndreieck (300) nach einem der Ansprüche 1 bis 5,
**gekennzeichnet durch**
a) zumindest einen Sensor (340) zur Detektion der Einsatzkonfiguration des Warndreiecks (300) und/oder zur Messung einer Umgebungshelligkeit des Warndreiecks (300) und
b) zumindest eine mit dem zumindest einen Sensor (340) und der zumindest einen Leuchtschicht (210) kommunikativ verbundene Steuereinheit (350) zur automatischen Aktivierung der zumindest einen Leuchtschicht (210) bei einer Detektion der Einsatzkonfiguration und/oder automatischen Anpassung einer Leuchtdichte der Leuchtschicht (210) an die Umgebungshelligkeit.

7. Warndreieck (300) nach einem der Ansprüche 1 bis 6,
**dadurch gekennzeichnet, dass**
die Folie (200)
a) zumindest ein sich flächig entlang der Folienebene (FE) erstreckendes Trägerelement (260), auf das die zumindest eine Leuchtschicht (210), die zumindest eine Photovoltaikschicht (280), bevorzugt zumindest eine Energiespeicherschicht (220) und bevorzugt zumindest eine Induktionsschicht (230) aufgebracht sind, umfasst, und/oder
b) zumindest eine Verkapselungsschicht (270) zum Schutz der zumindest einen Leuchtschicht (210), der zumindest einen Photovoltaikschicht (280), bevorzugt zumindest einer Energiespeicherschicht (220) und bevorzugt zumindest einer Induktionsschicht (230) vor Umwelteinflüssen umfasst,
c) wobei das Trägerelement (260) und/oder die Verkapselungsschicht (270) zumindest abschnittsweise transluzent ist.

8. Haltevorrichtung (100) zur Halterung eines Warndreiecks (300) nach einem der Ansprüche 1 bis 7, insbesondere in einer Transportkonfiguratior umfassend zumindest einen Energiespeicher und/oder ein Anschlussmittel für eine externen Energiequelle zur Versorgung der Übertragungsvorrichtung mit elektrischer Energie,
**gekennzeichnet durch**
a) zumindest eine induktive Übertragungsvorrichtung (130) zur induktiven Aufladung eines elektrischen Energiespeichers des Warndreiecks (300).

9. Verfahren zur Herstellung der Folie (200) eines Warndreiecks (300) nach
einem der Ansprüche 1 bis 7,
**gekennzeichnet durch** folgende Schritte
a) Bereitstellen eines flächigen Trägerelements (260) der Folie (200) und
b) Siebdrucken der zumindest einen Leuchtschicht (210), der zumindest einen Photovoltaikschicht, bevorzugt zumindest einer Energiespeicherschicht (220), bevorzugt zumindest einer Induktionsschicht (230) und bevorzugt zumindest einer Verkapselungsschicht (270) der Folie (200) auf das Trägerelement (260).

## Claims

1. Warning triangle (300) with a film (200), the film being stretched along a triangle plane of the warning triangle (300) in an operational configuration of the warning triangle (300),
a. wherein the film (200) comprises at least one flat electric luminescent layer (210) arranged along a film plane (FE) of the film for emitting visible light,
**characterized in that**
b. the film (200) comprises at least one flat photovoltaic layer (280) arranged along the film plane (FE) for supplying the luminescent layer (210) with electrical energy,
c. wherein the film (200) comprises at least one energy storage layer (220) arranged along the film plane (FE) for storing electrical energy to supply the luminescent layer (210),
d. wherein the film (200) comprises at least one flat induction layer (230) arranged along the film plane (FE) for inductively charging the energy storage layer (220),
e. wherein the at least one luminescent layer (210), the at least one energy storage layer (220), the at least one induction layer (230), and the at least one photovoltaic layer (280) each comprise a plurality of material layers aligned along the film plane (FE) and having material compositions that differ from one another.

2. Warning triangle (300) according to claim 1,
**characterized in that**
the foil is folded and/or rolled up in a transport configuration of the warning triangle (300).

3. Warning triangle (300) according to one of claims 1 to 2,
**characterized in that**
the at least one luminescent layer (280) is electrically connected to the photovoltaic layer (280) to generate a luminance adapted to an ambient brightness.

4. Warning triangle (300) according to any one of claims 1 to 3,
**characterized in that**
a. the at least one luminescent layer (210) is arranged on a front side of the film (200) parallel to the film plane (FE) and
b. the at least one photovoltaic layer (280) is arranged on a rear side of the film (200) opposite the front side and parallel to the film plane (FE).

5. Warning triangle (300) according to claim 4,
**characterized in that**
the at least one energy storage layer (220) and/or the at least one induction layer (230) is or are arranged between the at least one luminescent layer (210) and the at least one photovoltaic layer (280).

6. Warning triangle (300) according to any one of claims 1 to 5,
**characterized by**
a. at least one sensor (340) for detecting the operational configuration of the warning triangle (300) and/or for measuring an ambient brightness of the warning triangle (300) and
b. at least one control unit (350) communicatively connected to the at least one sensor (340) and to the at least one luminescent layer (210) for automatically activating the at least one luminescent layer (210) upon detection of the operational configuration and/or for automatic adjustment of a luminance of the luminescent layer (210) to the ambient brightness.

7. Warning triangle (300) according to any one of claims 1 to 6,
**characterized in that**
a. the foil (200) comprises at least one flat carrier element (260) extending along the film plane (FE), the at least one luminescent layer (210), the at least one photovoltaic layer (280), preferably the at least one energy storage layer (220) and preferably the at least one induction layer (230) being applied on the at least one carrier element (260), and/or
b. the foil (200) comprises at least one encapsulation layer (270) for protecting the at least one luminescent layer (210), the at least one photovoltaic layer (280), preferably the at least one energy storage layer (220) and preferably the at least one induction layer (230) from environmental influences,
c. the carrier element (260) and/or the encapsulation layer (270) being translucent at least in sections.

8. Holding device (100) for holding a warning triangle (300) according to one of claims 1 to 7, in particular in a transport configuration, the holding device (100) comprising
a. at least one inductive transmission device (130) for inductively charging an electrical energy store of the warning triangle (300) and
b. at least one energy store (131) and/or a connection means (132) for an external energy source for supplying the transmission device (130) with electrical energy,

9. Method for manufacturing the film (200) of a warning triangle (300) according to any one of claims 1 to 7,
**characterized by** the following steps:
a. providing a flat carrier element (260) of the film (200) and
b. screen printing the at least one luminescent layer (210), the at least one photovoltaic layer, preferably the at least one energy storage layer (220), preferably the at least one induction layer (230) and preferably at least one encapsulation layer (270) of the film (200) onto the carrier element (260).

## Revendications

1. Triangle de signalisation (300) comprenant un film (200), le film étant tendu selon un plan de triangle du triangle de signalisation (300) dans une configuration opérationnelle du triangle de signalisation (300),
a. le film (200) comprenant au moins une couche luminescente électrique (210) plate agencée le long d'un plan de film (FE) du film (200) pour émettre de la lumière visible
**caractérisé en ce que**
b. le film (200) comprend au moins une couche photovoltaïque (280) plate disposée le long du plan de film (FE) pour alimenter la couche luminescente (210) en énergie électrique,
c. le film (200) comprenant au moins une couche de stockage d'énergie (220) agencée le long du plan de film (FE) pour stocker de l'énergie électrique afin d'alimenter la couche lumineuse (210),
d. le film (200) comprenant au moins une couche d'induction (230) plate agencée le long du plan du film (FE) pour charger par induction la couche de stockage d'énergie (220),
e. l'au moins une couche luminescente (210), l'au moins une couche de stockage d'énergie (220), l'au moins une couche d'induction (230) et l'au moins une couche photovoltaïque (280) comprenant chacune une pluralité de couches de matériau alignées le long du plan du film (FE) et ayant des compositions de matériau qui diffèrent l'une de l'autre.

2. Triangle de signalisation (300) selon la revendication 1,
**caractérisé en ce que**
le film (200) est plié et/ou enroulé dans une configuration de transport du triangle de signalisation (300).

3. Triangle de signalisation (300) selon l'une des revendications 1 à 2,
**caractérisé en ce que**
l'au moins une couche luminescente (280) est connectée électriquement à la couche photovoltaïque (280) pour générer une luminance adaptée à une luminosité ambiante.

4. Triangle de signalisation (300) selon l'une quelconque des revendications 1 à 3,
**caractérisé en ce que**
a. l'au moins une couche luminescente (210) est disposée sur une face avant du film (200) parallèle au plan du film (FE) et
b. l'au moins une couche photovoltaïque (280) est disposée sur une face arrière du film (200) opposée à la face avant et parallèle au plan du film (FE).

5. Triangle de signalisation (300) selon la revendication 4,
**caractérisé en ce que**
l'au moins une couche de stockage d'énergie (220) et/ou l'au moins une couche d'induction (230) est ou sont disposées entre l'au moins une couche lumineuse (210) et l'au moins une couche photovoltaïque (280).

6. Triangle de signalisation (300) selon l'une quelconque des revendications 1 à 5,
**caractérisé par**
a. au moins un capteur (340) pour détecter la configuration opérationnelle du triangle de signalisation (300) et/ou pour mesurer une luminosité ambiante du triangle de signalisation (300) et
b. au moins une unité de commande (350) connectée en communication au au moins un capteur (340) et à l'au moins une couche luminescente (210) pour activer automatiquement l'au moins une couche luminescente (210) lors de la détection de la configuration opérationnelle et/ou pour l'ajustement automatique d'une luminance de la couche luminescente (210) à la luminosité ambiante.

7. Triangle de signalisation (300) selon l'une quelconque des revendications 1 à 6,
**caractérisé en ce que**
a. le film (200) comprend au moins un élément porteur (260) plat s'étendant le long du plan du film (FE), l'au moins une couche luminescente (210), l'au moins une couche photovoltaïque (280), de préférence l'au moins une couche de stockage d'énergie (220) et de préférence l'au moins une couche d'induction (230) étant appliquées sur l'au moins un élément porteur (260), et/ou
b. le film (200) comprend au moins une couche d'encapsulation (270) pour protéger l'au moins une couche luminescente (210), l'au moins une couche photovoltaïque (280), de préférence l'au moins une couche de stockage d'énergie (220) et de préférence l'au moins une couche d'induction (230) des influences environnementales,
c. l'élément de support (260) et/ou la couche d'encapsulation (270) étant translucides au moins par endroits.

8. Dispositif de maintien (100) pour maintenir un triangle de signalisation (300) selon l'une des revendications 1 à 7, notamment en une configuration de transport, le dispositif de maintien (100) comprenant
a. au moins un dispositif de transmission inductif (130) pour charger par induction un accumulateur d'énergie électrique du triangle de signalisation (300) et
b. au moins un accumulateur d'énergie (131) et/ou un moyen de connexion (132) pour une source d'énergie externe pour alimenter le dispositif de transmission (130) en énergie électrique.

9. Procédé de fabrication du film (200) d'un triangle de signalisation (300) selon l'une quelconque des revendications 1 à 7,
**caractérisé par** les étapes suivantes
a. fournir un élément porteur plat (260) du film (200) et
b. sérigraphier l'au moins une couche luminescente (210), l'au moins une couche photovoltaïque, de préférence l'au moins une couche de stockage d'énergie (220), de préférence l'au moins une couche d'induction (230) et de préférence l'au moins une couche d'encapsulation (270) du film (200) sur l'élément porteur (260).
